# EUROPEAN PATENT APPLICATION

(11) **EP 1 876 493 A2**
(43) Date of publication of application: **09.01.2008**
(21) Application number: 07108469.3
(22) Date of filing: 18.05.2007
(51) Int. Cl.: G03B 5/00

(54) **Camera adjustment mechanism, camera adjustment support construction, and camera assembly.**

(30) Priority: 19.05.2006 NL 1031847
(71) Applicant: Cambo Fotogafische Industrie B.V., 8263 AP Kampen (NL)
(72) Inventor: Zwep, Hendrik, 8271 DG, IJsselmuiden (NL); Ridder, Jan Abraham, 8016 DP, Zwolle (NL)
(74) Representative: van Loon, C.J.J.

(57) **Abstract**

A camera adjustment mechanism for adjusting the relative orientation of a lens (4) and an image recording unit (5). The mechanism comprises:
- a first control ring (7) provided with a first control ring thread (8), rotatable by a user with respect to a first reference portion (6) of the mechanism (1) about a first, at least imaginary, axis (L1);
- a movement element (9) rotatable with respect to the first reference portion about a second, at least imaginary, axis (L2) for, depending on rotation of the first control ring about the first axis, relatively at least rotating, on the one hand, the lens and, on the other hand, the image recording unit about the second axis, which movement element is provided with a movement element gearing (10); and
- a worm wheel (11) with double gearing (14, 15), rotatable with respect to the first reference portion about a third, at least imaginary, axis (L3), comprising a first worm wheel gearing (14) and a second worm wheel gearing (15), wherein groove directions (14a, 15a) of the first worm wheel gearing and the second worm wheel gearing, respectively, differ from each other, which worm wheel is situated between the first control ring (7) and the movement element (9).

## Description

The invention relates to a camera adjustment mechanism for adjusting the relative orientation of, on the one hand, a lens of a camera and, on the other hand, an image recording unit of the camera situated at a distance from the lens. The invention also relates to a camera adjustment support construction provided with such a camera adjustment mechanism. The invention further relates to a camera assembly comprising such a camera adjustment support construction.

With a technical camera, the lens is rotated or displaced with respect to the image recording unit (such as a film, digital chip, ground glass or the like) to realize certain effects. This effects have to do with shifting the plane of focus and adjusting the perspective of the recording. Such relative movements between lens and image recording unit are possible in that the lens and the image recording unit are at a distance from each other. The space between lens and image recording unit is enclosed by a light-tight flexible connection (bellows).

Rotation of lens or image recording unit about a horizontal axis is conventionally referred to as "tilt", and rotation about a vertical axis is conventionally referred to as "swing". Various camera adjustment mechanisms are known. These known mechanisms have a submechanism for realizing tilt and a submechanism for realizing swing, which submechanisms mutually differ in structure.

A drawback of the known camera adjustment mechanisms for realizing tilt and swing is that they take up much space. Thus, these mechanisms are many times larger than the associated control (rotary) knobs, which knobs are of a size normal for users. What is also troublesome is that the above-mentioned submechanisms have a different structure and control, which adversely affects the cost price and does not enhance the ease of use.

It is an object of the invention to provide a solution according to which camera adjustment can be realized in a user-friendly manner with compact means.

To this end, according to the invention, a camera adjustment mechanism according to claim 1 is provided.

The camera adjustment mechanism according to the invention comprises a first reference portion, a control ring with first control ring thread, a movement element with movement element gearing, and a worm wheel with double gearing situated between the first control ring and the movement element. The first control ring thread, the double gearing and the movement element gearing are in engagement with one another such that, as a result of rotation of the control ring with respect to the first reference portion by a user, the movement element rotates with respect to the first reference portion. Thus, the mechanism is suitable for relatively at least rotating, on the one hand, the lens and, on the other hand, the image recording unit due to a user rotating the control ring.

The control ring is extremely simple to operate by a user from various directions, for instance, with one or more fingers. Above-mentioned parts of the mechanism form a compact construction, which needs to take up hardly more space than the space taken up by and surrounding the control ring. The thus obtained user friendliness and compactness of the mechanism make the mechanism excellently suitable to use it in identical or similar form in multiple places in a camera adjustment support construction, for instance in places for adjusting tilt of the lens or of the image recording unit or in places for adjusting swing of the lens or of the image recording unit. This use in multiple places in a camera adjustment support construction enhances the user friendliness further and, in addition, has a favorable influence on the cost price of a camera adjustment support construction thus designed with multiple such adjustment options.

With the first control ring thread, double gearing and movement element gearing being in engagement with one another, a very high total transmission ratio can be realized. For instance, a total transmission ratio of 1:1000 (i.e. one rotation of the movement element is brought about by rotating the control ring 1000 times) is found to be practically feasible. As a result, camera adjustment can be carried out with extremely fine precision, while the number of parts of the mechanism is very small.

It is further advantageous that the mechanism can have a self-locking design. That means that the mechanism does not begin to move if an external rotational force is exerted on the movement element in a direction of rotation of the movement element. Being self-locking can be realized by choosing the geometry, such as pitch, flank angles and the like, of the gearing such that the angle between contact surfaces and direction of rotation is sufficiently large at the location of the contact surfaces for self-locking transmission. This self-locking makes the use of an additional locking mechanism, such as a locking knob, redundant. This further benefits the compactness and user friendliness of the mechanism.

Further, according to the invention, a camera adjustment support construction according to claim 10 is provided, and a camera assembly according to claim 15.

Specific embodiments of the invention are set forth in the dependent claims.

In the following, the invention is explained in more detail with reference to the schematic Figures in the appended drawing, in which:
Fig. 1 shows, in perspective, an example of an embodiment of a camera adjustment mechanism according to the invention in a partly cutaway condition;
Fig. 2 shows, in perspective, a part of the camera adjustment mechanism of Fig. 1;
Fig. 3 shows, in perspective, an example of an embodiment of a camera assembly according to the invention; and
Fig. 4 shows, in perspective, the camera assembly of Fig. 3 again, but in a different view angle.

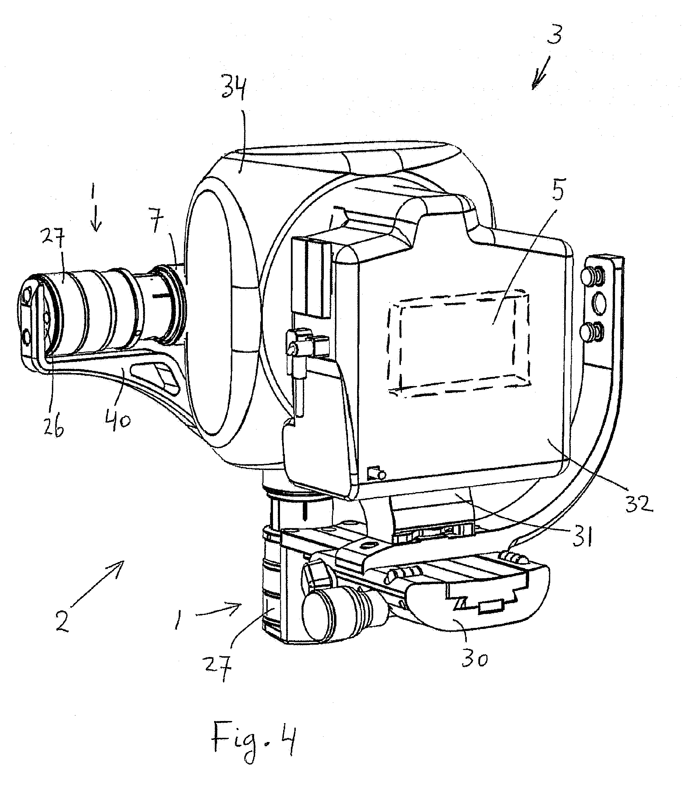

The Figures show a camera adjustment mechanism 1 for adjusting the relative orientation of, on the one hand, a lens 4 of a camera 3 and, on the other hand, an image recording unit 5 of the camera situated at a distance from the lens. The image recording unit 5 is very schematically shown in Fig. 4 inside a housing element 32 of the camera 3. The image recording unit 5 may be a film, digital chip, ground glass or the like.

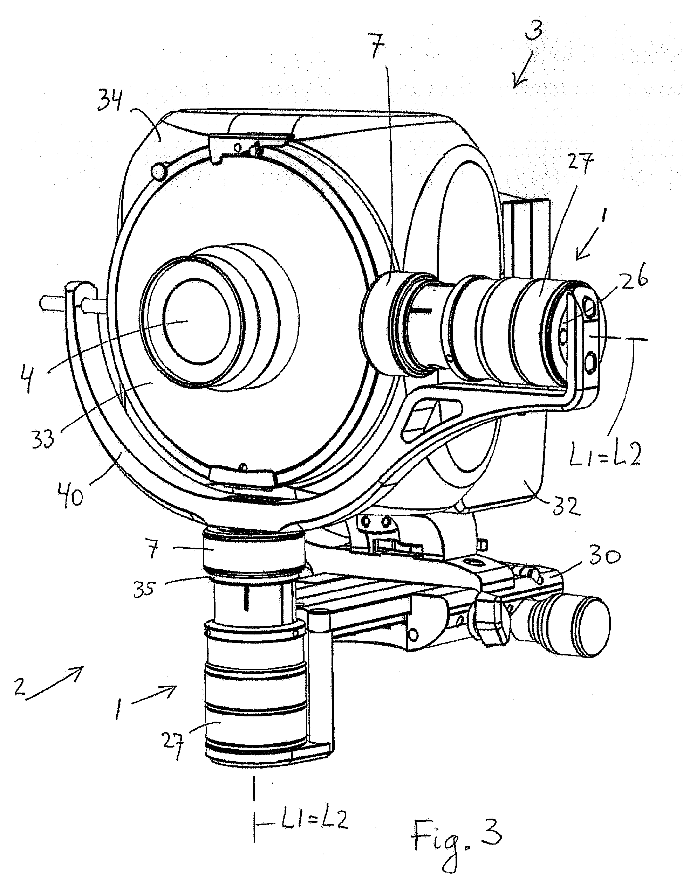

Fig. 3 shows that the lens 4 is attached to a lens panel 33. From the lens panel 33, a side of a light-tight flexible connection (bellows) 34 is suspended. In the example shown, the bellows is suspended from the housing element 32 of the camera 3 by another side. Thus, in the conventional manner, the space between lens and image recording unit is enclosed by the bellows.

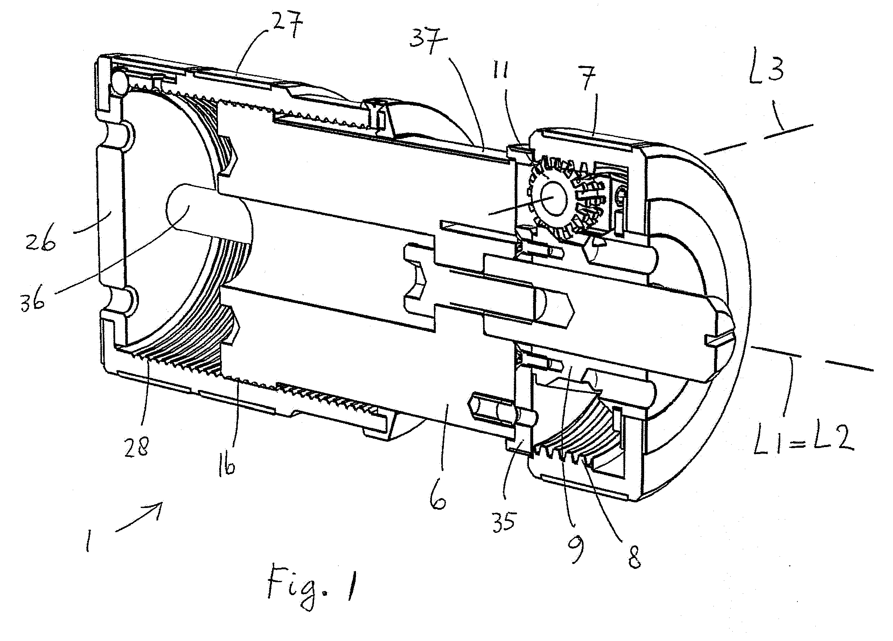

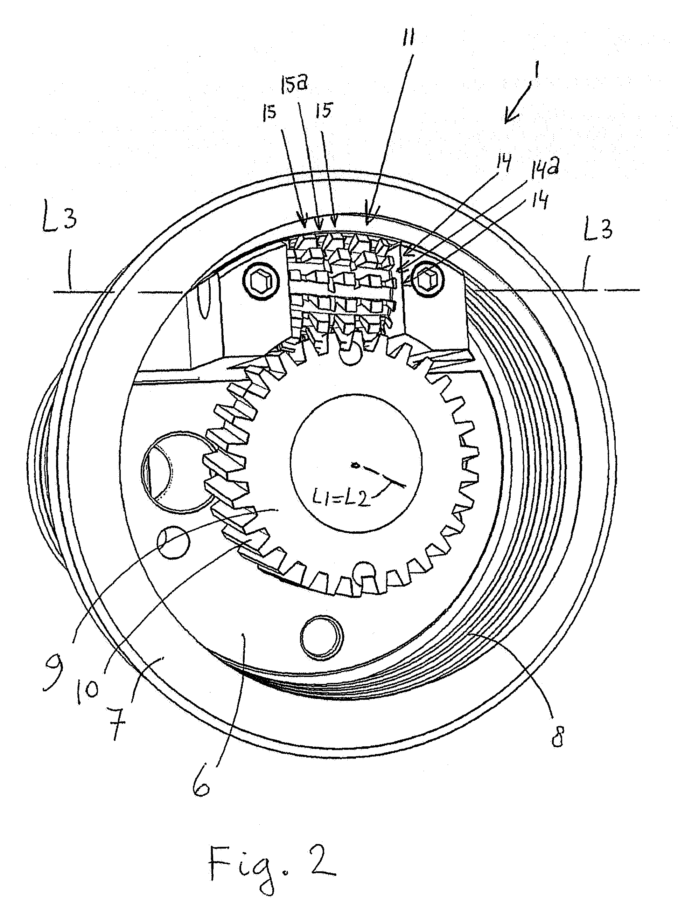

Figs. 1 and 2 show a first reference portion 6 of the camera adjustment mechanism 1. In the embodiment shown, the first reference portion 6 has a substantially cylindrical circumferential portion. However, the first reference portion 6 may also have a different design. The mechanism 1 further comprises a first control ring 7 provided first control ring thread 8. In the example shown, the first control ring thread 8 is an internal thread of the first control ring 7. Use of an internal thread enhances the compactness and user friendliness of the mechanism. However, non-internal thread may also be used, for instance an external thread or a thread on an end face of the first control ring 7. The thread may extend along only a single helicoidal line, but may also extend along multiple helicoidal lines which extend parallel to one another.

The first control ring 7 is rotatable by a user about a first, at least imaginary, axis L1 with respect to the first reference portion 6.

The mechanism 1 further comprises a second movement element 9 rotatable about an, at least imaginary, axis L2 with respect to the first reference portion for, depending on rotation of the first control ring 7 about the first axis L1, relatively at least rotating, on the one hand, the lens 4 and, on the other hand, the image recording unit 5 about the second axis L2. In the example shown, the second axis L2 coincides with the first axis L1. However, the coincidence of the first and second axis is not necessary; the first and second axis may also be parallel to each other at a distance from each other. Use of coinciding or parallel first and second axes simplifies the manufacture of the mechanism 1 and enhances the user friendliness. However, use of non-parallel first and second axes is also possible. The movement element 9 is provided with a movement element gearing 10, see Fig. 2.

The mechanism 1 further comprises a worm wheel 11 with double gearing 14, 15 which is rotatable with respect to the first reference portion about a third, at least imaginary, axis L3, comprising a first worm wheel gearing 14 and a second worm wheel gearing 15. The first worm wheel gearing 14 has groove directions 14a and the second worm wheel gearing has groove directions 15a. These groove directions 14a and 15a differ from each other. In the example shown, the groove directions 14a and 15a intersect each other. However, it is also possible that the groove directions 14a and 15a do not intersect each other in that, for instance, the groove directions 14a are only situated at the axial end portions of the worm wheel 11, while the groove directions 15a are only situated between these end portions where the groove directions 14a are not situated.

In the example, the third axis L3 is perpendicular to the first axis L1. This simplifies the manufacture and contributes to the compactness of the mechanism 1. However, the third axis L3 may also be placed so as to be not perpendicular to the first axis L1. The worm wheel 11 is situated between the first control ring 7 and the movement element 9 such that the first worm wheel gearing 14 is in engagement with the first control ring thread 8 and the second worm wheel gearing 15 is in engagement with the movement element gearing 10 such that above-mentioned rotation of the first control ring 7 about the first axis L1 results in a rotation of the worm wheel 11 about the third axis L3, which rotation of the worm wheel 11 results in a rotation of the movement element 9 about the second axis L2.

In the example, the worm wheel 11 is bearing-mounted on the first reference portion 6 and the movement element 9 is also bearing-mounted on the first reference portion 6, while the control ring 7 is bearing-mounted on the movement element 9. However, instead of bearing-mounting of the control ring 7 on the movement element 9, the control ring 7 may also be bearing-mounted on the first reference portion 6, in which case it is, in addition, possible to bearing-mount the movement element 9 on the control ring 7 instead of to the first reference portion 6.

Plays between the mutual gearings or thread may be adjustable due to use of suitable (clamping) devices, with which, for instance, if desired, the worm wheel 11 can be maintained in engagement with the movement element 9 or the control ring 7 to a greater or lesser extent.

By matching the "left/right" orientations of the first control ring thread 8, the first worm wheel gearing 14, the second worm wheel gearing 15 and the movement element gearing 10, it can be achieved that, as a result of rotation of the control ring 7, the movement element 9 rotates in the same direction as the control ring 7. This contributes further to the user friendliness of the mechanism. In the case that the axes L1 and L2 are not parallel, a similar effect can be realized in the sense that the rotation of the movement element 9 projected on a plane perpendicular to the first axis L1 has the same sense of rotation as the rotation of the control ring 7 which causes the rotation of the movement element 9.

Further, the mechanism 1 may be provided with a scale ring 35 provided with scale marks which is fixed with respect to the movement element and accordingly rotates along with the movement element. From this scale ring, the user can read out a rotational position.

With the first control ring thread 8, double gearing 14, 15 and movement element gearing 10 being in engagement with one another, various total transmission ratios between the rotation angle of the movement element and the rotation angle of the control ring required for this can be realized. Thus, it is found practically possible to realize all possible total transmission ratios in a range from 1:8 to 1:1000. It has been found that, for realizing a good balance between precision and ease of operation, the mechanism 1 is preferably arranged with a total transmission ratio which is in a range from 1:25 to 1:200. For instance, the total transmission ratio may be 1:72, in which case a rotation of the movement element by 5 degrees can be brought about by one rotation of the first control ring. The mechanism may be provided with a click provision which makes a click with every rotation of the first control ring.

As described by way of introduction, with a technical camera, the lens is not only rotated with respect to the image recording unit, but also displaced to realize certain effects. The displacement of lens or image recording unit in lateral direction is typically referred to as "lateral shift", and displacement in upward or downward direction is typically referred to as "rise and fall".

Various mechanisms for realizing lateral shift and rise and fall are known and can be used in combination with the camera adjustment mechanism 1 described so far, with which tilt and swing can be realized, in various places within a camera adjustment support construction.

A particularly advantageous embodiment of the camera adjustment mechanism 1 is obtained if such a displacement mechanism is combined with the mechanism 1 described so far in a manner as will now be described.

In the example shown, the first reference portion 6 has a substantially cylindrical circumferential portion provided with first reference portion thread 16 and the mechanism 1 further comprises a second control ring 27 provided with a second control ring thread 28, rotatable by a user about the first axis L1 with respect to a second reference portion 26 of the mechanism 1, which second control ring is connected with the first reference portion 6 by engagement of the second control ring thread and the first reference portion thread 16 such that rotation of the second control ring 27 about the first axis results in a translation of the first reference portion 6 with respect to the second reference portion 26 in the direction of the first axis L1, which translation of the first reference portion results in a translation of the movement element 9 with respect to the second reference portion 26 in the direction of the first axis L1.

In this manner, a particularly compact and user-friendly column construction is obtained with which both relative rotations and relative displacements of lens and image recording unit can be realized. One or more of such column constructions can simply be used in various places within a camera adjustment support construction by simply attaching the second reference portion 26 to a part of the camera adjustment support construction and directly or indirectly attaching the movement element 9 to the lens or image recording unit to be moved thereby.

In the example, the second reference portion 26 is a bearing disc 26, of which only one disc half is shown in the cutaway Fig. 1. At right angles to this bearing disc 26, two pins 36 are attached which extend from the bearing disc 26 through the interior of the control ring 27. It is noted that, in Fig. 1, only one pin 36 is shown which is attached to the disc half shown; the other pin 36 is attached to the other disc half not shown. These pins 36 extend through bores in the first reference portion 6. With above-mentioned translation of the first reference portion 6 with respect to the bearing disc 26 in the direction of the first axis L1, the first reference portion 6 slides over these pins 36. During above-mentioned translation, the pins 36 extending through the bores prevent rotation of the first reference portion 6 with respect to the bearing disc 26 about the first axis L1. For preventing such a rotation, only one pin is also sufficient instead of the above-mentioned two pins. But various other means may also be used for preventing rotation of the first reference portion 6 with respect to the second reference portion 26 about the first axis L1 during above-mentioned translation.

Further, an external part of the first reference portion 6 may be provided with a scale indication 37 from which the user can read a translation position of the movement element 9 with respect to the second reference portion 26.

Figs. 3 and 4 show a camera adjustment support construction 2 according to the invention. The construction 2 comprises a support portion 30 for setting up the construction 2 fixedly with respect to a set-up space in operative condition, and at least one camera adjustment mechanism 1 as described hereinabove. To this end, the support portion 30 may, for instance, be mounted on a tripod in the set-up space. The camera adjustment support construction 2 is part of a camera assembly, which camera assembly further comprises a camera 3 comprising the lens 4 and the image recording unit 5, and means 31 for attaching the camera to the camera adjustment support construction.

Preferably, the camera adjustment support construction 2 comprises an assembly comprising two similar ones of the at least one camera adjustment mechanism 1, while the respective first axes L1 of the one of the two camera adjustment mechanisms and the other of the two camera adjustment mechanisms are mutually not parallel, but are in mutually parallel or coinciding planes, for adjustment, by the two camera adjustment mechanisms of the assembly, of the lens 4 with respect to the support portion 30 or for adjustment, by the two camera adjustment mechanisms of the assembly, of the image recording unit 5 with respect to the support portion 30.

In the example shown in Figs. 3 and 4, the construction 2 is arranged for adjustment, by the two camera adjustment mechanisms of the assembly, of the lens 4 with respect to the support portion 30. Because the respective first axes L1 are mutually not parallel, but are in mutually parallel or coinciding planes, the lens 4 is rotatable in, for practice, all desired manners, so that realizing tilt and swing is possible.

Preferably, above-mentioned respective first axes L1 are perpendicular to each other. In this manner, in practice, various desired rotational position combinations can efficiently be realized in a manner clear to the user. More preferably, here, the one of above-mentioned respective axes L1 is oriented horizontally in the set-up space and the other first axis L1 vertically, in which case the user can set tilt and swing in a user-friendly manner. More preferably, here, further, above-mentioned respective first axes L1 are in mutually coinciding planes so that, in practice, various desired rotational position combinations can efficiently be realized in a manner clear to the user.

In order to further enhance the compactness of the construction, with the camera adjustment support construction 2, the assembly is preferably arranged for moving, by the movement element 9 of the one camera adjustment mechanism 1, the other camera adjustment mechanism 1 as a whole. In the example shown in Figs. 3 and 4, this is the case in that the movement element of the vertically oriented mechanism 1 is attached to a bracket 40, while the horizontally oriented mechanism 1 is mounted to this bracket 40 by its second reference portion 26. Here, the movement element of the horizontally oriented mechanism 1 is attached to the lens 4 via the lens panel 33. It is noted that, in the example, the vertically oriented mechanism 1 is, with its second reference portion 26, fixedly oriented with respect to the support portion 30, which fixed orientation can, in the example, be set by the user for realizing different distances between the lens 4 and the image recording unit 5.

The camera adjustment support construction may further comprise two similar such assemblies, the one of the two assemblies being arranged for adjusting the lens with respect to the support portion 30 and the other of the two assemblies being arranged for adjusting the image recording unit 5 with respect to the support portion 30. Thus, with compact means, a large number of user-friendly adjusting possibilities are offered.

It is noted that the above-mentioned examples of embodiments do not limit the invention and that various alternatives are possible within the scope of the appended claims. Thus, a complete camera as a whole may be attached to the camera adjustment support construction with the aid of a camera-specific fixing element. But also, instead, a so-called camera back comprising the image recording unit may be attached to this construction. Further, the camera adjustment support construction may be designed with means for bringing a camera or camera back into a horizontal or vertical position, as desired by the photographer who wishes to make an horizontally extending or vertically extending shot, respectively. It is further possible to use a camera adjustment mechanism of the above-described type for changing between above-mentioned horizontal and vertical position or an intermediate position and/or for realizing different distances between the lens and the image recording unit. Such and similar alternatives are understood to fall within the framework of the invention as defined in the appended claims.

## Claims

1. A camera adjustment mechanism for adjusting the relative orientation of, on the one hand, a lens (4) of a camera (3) and, on the other hand, an image recording unit (5) of the camera situated at a distance from the lens, comprising:
- a first control ring (7) provided with a first control ring thread (8), rotatable by a user with respect to a first reference portion (6) of the mechanism (1) about a first, at least imaginary, axis (L1);
- a movement element (9) rotatable with respect to the first reference portion about a second, at least imaginary, axis (L2) for, depending on rotation of the first control ring about the first axis, relatively at least rotating, on the one hand, the lens and, on the other hand, the image recording unit about the second axis, which movement element is provided with a movement element gearing (10); and
- a worm wheel (11) with double gearing (14, 15), rotatable with respect to the first reference portion about a third, at least imaginary, axis (L3), comprising a first worm wheel gearing (14) and a second worm wheel gearing (15), wherein groove directions (14a, 15a) of the first worm wheel gearing and the second worm wheel gearing, respectively, differ from each other, which worm wheel is situated between the first control ring (7) and the movement element (9) such that the first worm wheel gearing (14) is in engagement with the first control ring thread (8) and the second worm wheel gearing (15) is in engagement with the movement element gearing (10), such that said rotation of the first control ring about the first axis (L1) results in a rotation of the worm wheel about the third axis (L3), which rotation of the worm wheel results in a rotation of the movement element about the second axis (L2).

2. A camera adjustment mechanism according to claim 1, wherein the second axis (L2) coincides with or is parallel to the first axis (L1).

3. A camera adjustment mechanism according to claim 1 or 2, wherein the third axis (L3) is perpendicular to the first axis (L1).

4. A camera adjustment mechanism according to any one of the preceding claims, wherein the first control ring thread (8) is an internal thread of the first control ring (7).

5. A camera adjustment mechanism according to any one of the preceding claims, wherein the rotation of the movement element (9) projected on a plane perpendicular to the first axis (L1), brought about as a result of rotation of the first control ring (7) has the same sense of rotation as the rotation of the first control ring (7).

6. A camera adjustment mechanism according to any one of the preceding claims, wherein a total transmission ratio between a rotation angle of the movement element (9) and a rotation angle of the control ring (7) required for this is in a range from 1:8 to 1:1000.

7. A camera adjustment mechanism according to claim 6, wherein said total transmission ratio is in a range from 1:25 to 1:200.

8. A camera adjustment mechanism according to any one of the preceding claims, wherein the first reference portion (6) has a substantially cylindrical circumferential portion provided with a first reference portion thread (16), and wherein the mechanism (1) further comprises:
- a control ring (27) provided with second control ring thread (28), rotatable by a user about the first axis (L1) with respect to a second reference portion (26) of the mechanism (1), which second control ring is connected with the first reference portion (6) by engagement of the second control ring thread and the first reference portion thread (16) such that rotation of the second control ring (27) about the first axis results in a translation of the first reference portion (6) with respect to the second reference portion (26) in the direction of the first axis (L1), which translation of the first reference portion results in a translation of the movement element (9) with respect to the second reference portion (26) in the direction of the first axis (L1).

9. A camera adjustment mechanism according to claim 8, further comprising means (36) for preventing rotation of the first reference portion (6) with respect to the second reference portion (26) about the first axis (L1) during said translations.

10. A camera adjustment support construction comprising a support portion (30) for setting up the construction (2) fixedly with respect to a set-up space in operative condition, and at least one camera adjustment mechanism (1) according to any one of the preceding claims.

11. A camera adjustment support construction according to claim 10, comprising an assembly comprising two similar ones of the at least one camera adjustment mechanism (1), wherein the respective first axes (L1) of the one of the two camera adjustment mechanisms and the other of the two camera adjustment mechanisms are mutually not parallel, but are in mutually parallel or coinciding planes, for adjustment, by the two camera adjustment mechanisms of the assembly, of the lens (4) with respect to the support portion (30) or for adjustment, by the two camera adjustment mechanisms of the assembly, of the image recording unit (5) with respect to the support portion (30).

12. A camera adjustment support construction according to claim 11, wherein said respective first axes (L1) are perpendicular to each other.

13. A camera adjustment support construction according to claim 11 or 12, wherein the assembly is arranged for moving, by the movement element (9) of the one camera adjustment mechanism (1), the other camera adjustment mechanism (1) as a whole.

14. A camera adjustment support construction according to any one of claims 11-13, comprising two similar such assemblies, the one of the two assemblies being arranged for adjusting the lens (4) with respect to the support portion (30) and the other of the two assemblies being arranged for adjusting the image recording unit (5) with respect to the support portion (30).

15. A camera assembly comprising a camera adjustment support construction (2) according to any one of claims 10-14, a camera (3) comprising a lens (4) and an image recording unit (5), and means (31) for attaching the camera to the camera adjustment support construction.
